# EUROPÄISCHE PATENTSCHRIFT

(11) **EP 1 652 722 B1**
(45) Veröffentlichungstag und Bekanntmachung des Hinweises auf die Patenterteilung: **11.04.2007**
(21) Anmeldenummer: 05021925.2
(22) Anmeldetag: 07.10.2005
(51) Int. Cl.: B60N 2/36, B60N 2/48, B60N 2/68

(54) **Geteilte Rückenlehne für einen Kraftfahrzeugsitz sowie Verfahren zur Unterbindung der Relativbewegung der beiden Teile der geteilten Rückenlehne**
Divided backrest for an automotive vehicle and process to hinder the relative motion of the two segments of the divided backrest
Dossier divisé pour un siège de véhicule automobile ainsi que procédé pour empêcher le mouvement relatif des deux segments du dossier divisé

(30) Priorität: 30.10.2004 DE 102004052718
(43) Veröffentlichungstag der Anmeldung: 03.05.2006
(73) Patentinhaber: Bayerische Motorenwerke Aktiengesellschaft, 80809 München (DE)
(72) Erfinder: Troemer, Michael, 83626 Valley (DE)

(56) Entgegenhaltungen:
- EP-A- 0 854 063
- DE-A1- 19 810 347
- DE-C2- 19 549 564
- FR-A- 2 748 432
- US-B1- 6 203 104

## Beschreibung

Die Erfindung betrifft eine geteilte Rückenlehne für einen Kraftfahrzeugsitz mit den im Oberbegriff des Patentanspruchs 1 angegebenen Merkmalen. DE-C2-195 49 564 [FUJI JUKOGYO K.K. ET AL.] offenbart solch eine geteilte Rückenlehne. Darüber hinaus betrifft die Erfindung ein Verfahren zur Unterbindung der Relativbewegung der beiden Teile der geteilten Rückenlehne.

Geteilte Rückenlehnen für Rückbänke in Kraftfahrzeugen sind bekannt. Es gibt verschiedene Rückenlehnen, die in unterschiedlichen Verhältnissen unterteilt werden können, beispielsweise ein Drittel zu zwei Drittel, 40%-20%-40% oder mittig. Dabei kann jeder der Teile-egal welches Teilungsverhältnis vorliegt-separat nach vorne umgeklappt werden, so dass der Stauraum des Kraftfahrzeugs variabel vergrößert werden kann. Bei einer mittig geteilten Rückenlehne sollte keine dritte Person auf der Rückbank befördert werden, da bei einem Unfall die beiden Teile der Rückenlehne sich unterschiedlich nach vorne bewegen können und die dritte Person, die sich mit ihrem Rücken teilweise an einem Teil und teilweise am anderen Teil anlehnt, beträchtliche Verletzungen erleiden kann.

Der Erfindung liegt die Aufgabe zugrunde, eine geteilte Rückenlehne für einen Kraftfahrzeugsitz mit den Merkmalen im Oberbegriff des Patentanspruches 1 anzugeben, bei der auch eine dritte Person, die sich an beiden Teilen der Rückenlehne anlehnt, befördert werden kann.

Diese Aufgabe ist durch die im Patentanspruch 1 angegebenen Merkmale gelöst. Darüber hinaus wird die Aufgabe auch durch ein Verfahren mit den im Patentanspruch 16 angegebenen Merkmalen gelöst. Vorteilhafte Ausgestaltungen der Erfindung sind den Unteransprüchen entnehmbar.

Dadurch, dass bei der erfindungsgemäßen geteilten Rückenlehne ein Verriegelungsmechanismus vorgesehen ist, der eine Entriegelungsposition und eine Verriegelungsposition aufweist, wobei dieser Verriegelungsmechanismus mit der ersten Aufnahmevorrichtung verbunden ist, kann durch Einschieben der ersten Stange der Mittelkopfstütze ein Übergang des Verriegelungsmechanismus von der Entriegelungsposition in die Verriegelungsposition in einfacher Art und Weise erreicht werden. Bei der Beförderung einer dritten Person auf der Rückbank eines Kraftfahrzeugs ist es im Hinblick auf das Verletzungsrisiko dringend geboten, dieser auch eine Kopfstütze zuzuordnen. Aufgrund der Erfindung ist dann gewährleistet, dass in der Gebrauchsstellung der Mittelkopfstütze in ihrem eingeschobenen Zustand, die beiden Teile der Rückenlehne ihre relative Lage zueinander nicht mehr verändern können und die geteilte Rückenlehne somit als eine starre Einheit reagiert. Im Ergebnis erhält man damit eine Rückenlehne, deren beide Teile einzeln umgeklappt werden können, solange die Mittelkopfstütze nicht eingesetzt bzw. in ihre Gebrauchsstellung eingeschoben ist.

Eine vorteilhafte einfache Art eines Verriegelungsmechanismus wird durch einen Hebel und einen damit verbundenen Bolzen realisiert, der in der Horizontalen bewegbar ist, die sich im ersten Teil der Rückenlehne befinden, und sich gleichzeitig im zweiten Teil der Rückenlehne ein Aufnahmerohr zur formschlüssigen Aufnahme des Bolzens befindet. Bevorzugt ist das Aufnahmerohr zum ersten Teil der Rückenlehne hin in der Form eines sich öffnenden Trichters ausgebildet, so dass eine einfachere Einführung des Bolzens vom ersten Teil her erfolgen kann, da keine hundertprozentige Justierung der beiden Teile der Rückenlehne gegeben sein muss. Bevorzugt weist der Hebel eine Nase auf, die mit der Stange der Mittelkopfstütze zusammenwirkt, so dass eine einfache und sichere Bedienung des Verriegelungsmechanismus beim Einschieben bzw. Herausziehen der Mittelkopfstütze in ihrer Gebrauchsposition erfolgt. Bevorzugt wird der Verriegelungsmechanismus dabei gegen eine Feder bewegt, die ihn in seine Entriegelungsposition zu bewegen versucht. Da gängige Mittelkopfstützen regelmäßig zwei Stangen aufweisen, ist es vorteilhaft, im zweiten Teil der Rückenlehne in der Nähe der Kante eine zweite Aufnahmevorrichtung für eine zweite Stange vorzusehen. Wenn die zweite Stange kürzer ausgebildet ist als die erste Stange der Mittelkopfstütze, kann die Mittelkopfstütze von ihrer Nutzposition in eine weggeschwenkte Position rotiert werden, ohne dass sie vollständig aus der Rückenlehne entfernt werden muss. Besonders bevorzugt ist die Mittelkopfstütze in ihrer Breite verstellbar, insbesondere über einen Federmechanismus. Dadurch ist es möglich, dass sie in ihrem weggeschwenkten Zustand mit ihrer zweiten Stange in eine dritte Aufnahmevorrichtung im ersten Teil eingeschoben werden kann und somit ein Klappern während der Fahrt vermieden ist, wenn die Mittelkopfstütze nicht benötigt wird.

Ein Ausführungsbeispiel der Erfindung wird anhand einer Zeichnung näher erläutert. Es zeigen
- Fig. 1: eine Ansicht einer Rückenlehne mit einer Mittelkopfstütze in einer weggeschwenkten Position,
- Fig. 2: einen Ausschnitt der Figur 1, in der die wesentlichen mechanischen Teile dargestellt sind,
- Fig. 3: einen Ausschnitt gemäß Figur 2, wobei sich die Mittelkopfstütze im nicht geschwenkten, herausgezogenen Zustand befindet,
- Fig. 4: einen Ausschnitt gemäß Figur 3, wobei die Mittelkopfstütze im eingeschobenen Zustand dargestellt ist,
- Fig. 5: eine Detaildarstellung zu Figur 4 unter einem anderen Blickwinkel,
- Fig. 6: eine Darstellung der mechanischen Teile eines Ausschnitts vergleichbar mit Figur 4 unter einem anderen Blickwinkel, wobei die Polsterung der Mittelkopfstütze entfernt ist und
- Fig. 7: eine Detaildarstellung wie in Fig. 5, wobei sich die Mittelkopfstütze in ihrer weggeschwenkten eingeschobenen Position befindet.

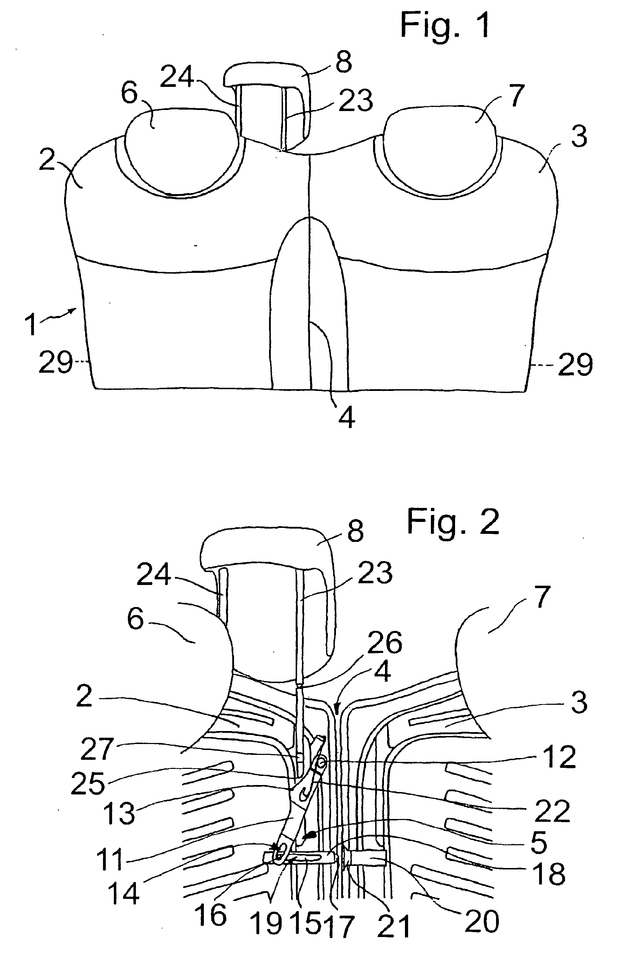

In den Figuren 1 und 2 ist eine erfindungsgemäße geteilte Rückenlehne 1 für einen Kraftfahrzeugsitz dargestellt, bei der eine Mittelkopfstütze 8 in ihrer weggeschwenkten, herausgezogenen Position dargestellt ist. Figur 1 zeigt hierbei eine Gesamtansicht der Rückenlehne 1, wohingegen Figur 2 einen Ausschnitt aus Figur 1 zeigt, bei dem die Polsterung entfernt ist, so dass die wesentlichen mechanischen Teile der Erfindung gut zu erkennen sind.

Die Rückenlehne 1 weist einen ersten Teil 2 und einen zweiten Teil 3 auf, die unabhängig voneinander jeweils um eine horizontale Achse 29 auf eine (nicht dargestellte) Sitzfläche heruntergeklappt werden kann. Dadurch ist eine flexible Gestaltung der Ladefläche möglich, wobei gleichzeitig auf die Anzahl der auf der Rückbank zu befördernden Personen Rücksicht genommen werden kann. Die beiden Teile 2, 3 stoßen entlang einer vertikal verlaufenden Fuge 4 aneinander. Der erste Teil 2 weist eine erste Kopfstütze 6 und der zweite Teil 3 eine zweite Kopfstütze 7 auf. Soll auf der Rückbank eine dritte Person befördert werden, muss eine dritte Kopfstütze, die Mittelkopfstütze 8, vorhanden sein. Die Mittelkopfstütze 8 weist zwei Stangen 23, 24 auf, wobei die erste Stange 23 in einer ersten Aufnahmevorrichtung in Form einer ersten Hülse 9 unverlierbar gehalten wird. Dies erfolgt dadurch, dass die erste Stange 23 eine umlaufende Nut 26 aufweist, die mit nicht dargestellten Mitteln zusammenwirkt, so dass die Stange 23 aus der ersten Hülse 9 nur herausgezogen werden kann, wenn das passende Werkzeug verwendet wird. Die zweite Stange 24 der Mittelkopfstütze 8 stößt an der Rückfläche des ersten Teils 2 an.

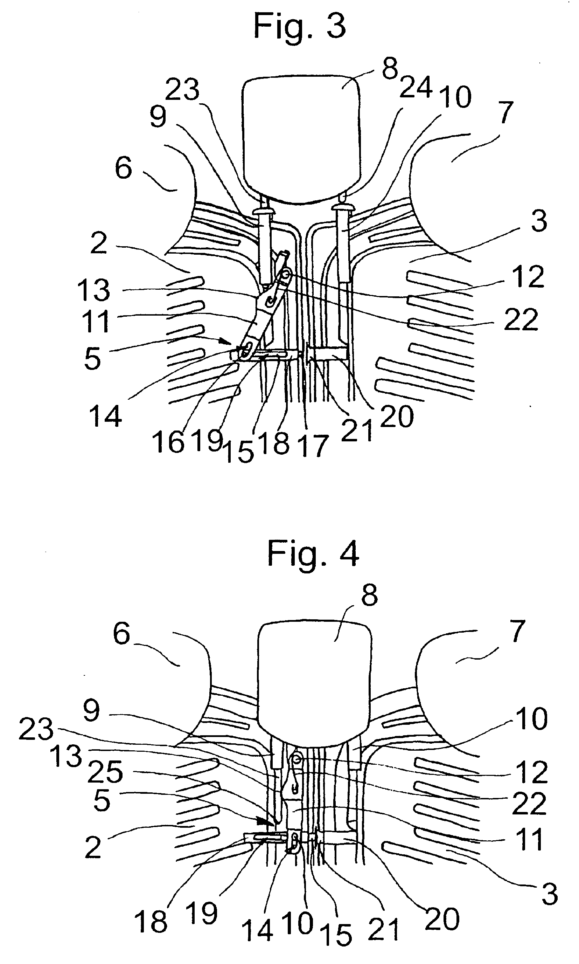

In Figur 2 ist durch das Weglassen der Polsterung der Rückenlehne 1 gut ein Verriegelungsmechanismus 5 zu erkennen, dessen genaue Funktionsweise weiter unten zu den Figuren 4 bis 7 näher beschrieben wird. Der Verriegelungsmechanismus 5 weist auf der Seite des ersten Teils 2 einen Hebel 11 auf, der um einen ortsfesten Drehpunkt 12 um eine im Wesentlichen horizontale Achse schwenkbar ist. Der Hebel 11 ist mit einer Feder 22 verbunden, die ihn in der dargestellten Entriegelungsposition hält und beim Auslenken aus derselben wieder versucht in diese zurückzubewegen. Der Hebel 11 weist eine Nase 13 auf, die mit dem Ende 25 der ersten Stange 23 der Mittelkopfstütze 8 bzw. dem weiteren Verlauf der ersten Stange 23 zusammenwirkt. Am freien Ende des Hebels 11 ist eine Kulisse 14 ausgebildet, in der ein Stift 16 eines Bolzens 15 läuft. Der Bolzen 15 ist in einem Führungsrohr 18 angeordnet, das in horizontaler Richtung ausgerichtet ist. Das Führungsrohr 18 weist in horizontaler Richtung ein Langloch 19 auf, durch das der Stift 16 heraussteht und in dem dieser geführt wird. Das freie Ende 17 des Bolzens 15 endet im Bereich der Fuge 4 zwischen dem ersten Teil 2 und dem zweiten Teil 3. Dem freien Ende 17 gegenüberliegend ist am zweiten Teil 3 ein Aufnahmerohr 20 in horizontaler Richtung angeordnet. An seinem dem ersten Teil 2 zugewandten Ende weist das Aufnahmerohr 20 im Bereich der Fuge 4 einen Trichter 21 auf, der sich zum ersten Teil 2 hin öffnet.

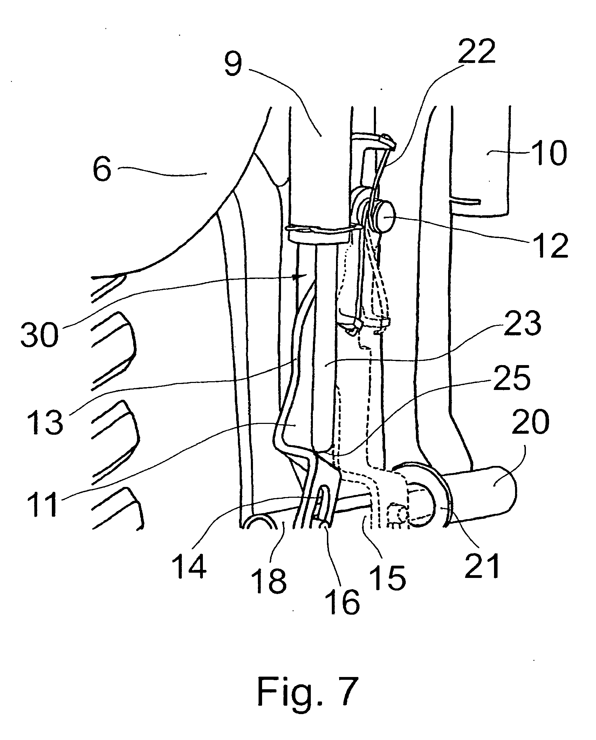

Im unteren Bereich der ersten Stange 23 ist eine Arretierungsnut 27 ausgebildet. Diese wirkt in der in Figur 7 dargestellten Stauposition der Mittelkopfstütze 8, in der sie sich in der weggeschwenkten, eingeschobenen Position befindet, mit einem nicht dargestellten Mittel zusammen, damit sie in dieser Stauposition ortsfest gehalten bleibt.

In Figur 3 ist ein Ausschnitt der Rückenlehne 1 dargestellt, der demjenigen aus Figur 2 entspricht. Der Unterschied zu Figur 2 liegt prinzipiell darin, dass die Aufnahmevorrichtungen in Form der beiden Hülsen 9, 10 zusätzlich dargestellt sind und sich die Mittelkopfstütze 8 in ihrer nicht geschwenkten, herausgezogenen Position befindet. In diese Position gelangt die Mittelkopfstütze 8, indem sie aus der in Figur 2 dargestellten Position um ihre erste Stange 23 von oben gesehen im Uhrzeigersinn so weit gedreht wird, bis ihre zweite Stange 24 über der zweiten Hülse 10 angeordnet ist. Auch in der hier gezeigten, nicht geschwenkten und herausgezogenen Position der Mittelkopfstütze 8 sind die beiden Teile 2, 3 der Rückenlehne 1 voneinander unabhängig auf die Sitzfläche herunterklappbar. Dies ist der Fall, da das Ende 25 bzw. der daran anschließende Teil der ersten Stange 23 der Mittelkopfstütze 8 noch nicht mit der Nase 13 des Hebels 11 zusammenwirkt. Dadurch ist noch keine Verbindung zwischen dem freien Ende 17 des Bolzens 15 des Verriegelungsmechanismus 5 und dem Aufnahmerohr 20 im zweiten Teil 3 der Rückenlehne 1 hergestellt.

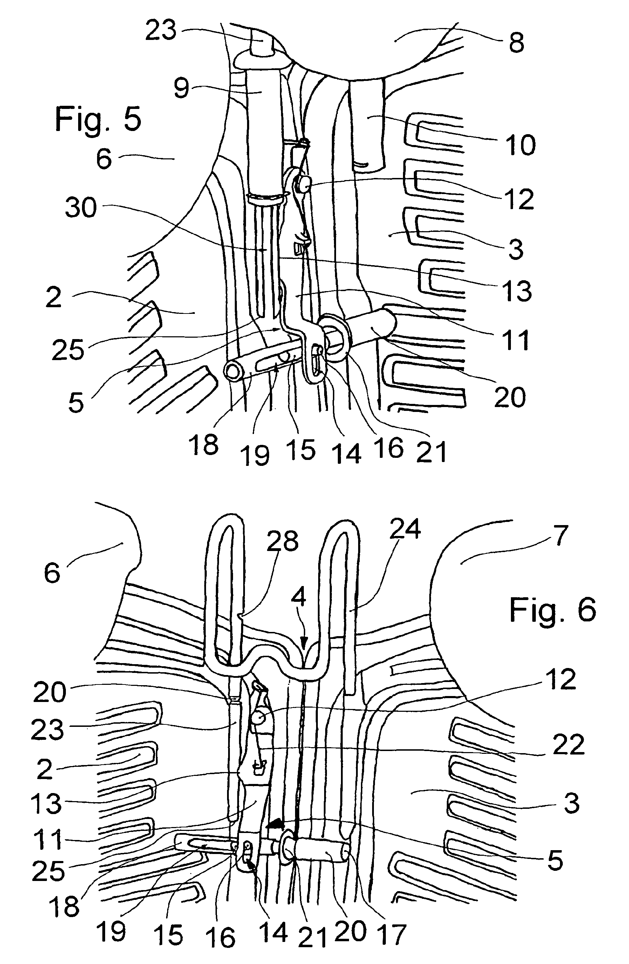

In den Figuren 4 bis 6 ist die Mittelkopfstütze 8 schließlich in ihrer nicht geschwenkten, eingeschobenen Position, der Gebrauchsstellung, dargestellt. Die Darstellung der Figur 4 entspricht der Figur 3. Figur 5 zeigt den erfindungswesentlichen Verriegelungsmechanismus 5 als Detailausschnitt unter einem anderen Blickwinkel. In Figur 6 ist dagegen das Polster der Mittelkopfstütze 8 weggelassen, so dass ein weiteres Detail sichtbar wird. Die Figur 6 ist aus einem weiteren Blickwinkel dargestellt.

Die Gebrauchsstellung der Mittelkopfstütze 8 wird dadurch erreicht, dass, ausgehend von der nicht geschwenkten, herausgezogenen Position der Figur 3 die Mittelkopfstütze 8 entlang der ersten und zweiten Hülse 9, 10 mittels ihrer beiden Stangen 23, 24 nach unten geschoben wird. Dabei betätigt die erste Stange 23 den Verriegelungsmechanismus 5. Das Ende 25 der ersten Stange 23 läuft von oben entlang der Nase 13 des Hebels 11 und drückt diesen somit entgegen der Kraft der Feder 22 in eine im Wesentlichen vertikale Position. Die Nase 13 liegt dabei im weiteren Verlauf-wenn das Ende 25 der ersten Stange 23 schon weiter nach unten fortgeschritten ist-an der Außenwand der ersten Stange 23 an. Bei der Schwenkbewegung des Hebels 11 um den ortsfesten Drehpunkt 12 bewegt sich sein freies Ende, an dem die Kulisse 14 ausgebildet ist, nach rechts. Dadurch bewegt sich auch der in der Kulisse 14 laufende Stift 16 mit nach rechts. Dies bewirkt, dass der Bolzen 15, an dem der Stift 16 ausgebildet ist, ebenfalls nach rechts bewegt wird. Das freie Ende 17 des Bolzens 15 taucht somit in dem ihm gegenüberliegenden Trichter 21 des Aufnahmerohrs 20 ein. Aufgrund des trichterförmigen Endes ist eine Toleranz in der Ausrichtung der beiden Teile 2, 3 zueinander möglich, so dass der Bolzen 15 somit auch bei leichten Versetzungen der beiden Teile 2, 3 gegeneinander problemlos in das Aufnahmerohr 20 findet. Das Aufnahmerohr 20 umschließt den Bolzen 15 formschlüssig. Damit wird eine Verbindung zwischen den beiden Teilen 2, 3 geschaffen, die dazu führt, dass sich die Rückenlehne 1 nur noch einheitlich bewegen lässt. Somit ist es nicht mehr möglich, dass jedes der beiden Teile 2, 3 für sich allein um die horizontale Achse 29 verschwenkt werden kann. Eine dritte Person, die sich vor der Mittelkopfstütze 8 befindet, kann somit bei einem Unfall nicht dadurch verletzt werden, dass sich die beiden Teile 2, 3 relativ zueinander bewegen und sich somit die Fuge 4 öffnet.

Die Mittelkopfstütze 8 kann in der dargestellten Verriegelungsposition des Verriegelungsmechanismus 5 fixiert werden. Dies wird durch die in Figur 6 dargestellte Sicherungskerbe 28 erreicht, wie dies bei gewöhnlichen Kopfstützen aus dem Stand der Technik bekannt ist.

Der Übergang des Verriegelungsmechanismus 5 von der Verriegelungsposition-wie in den Figuren 4 bis 6 dargestellt-in seine Entriegelungspositionwie in den Figuren 1 bis 3 und 7 dargestellt-erfolgt durch Herausziehen der Mittelkopfstütze 8 in umgekehrter Reihenfolge wie oben dargestellt. Dabei bewegt sich der Bolzen 15 wieder mit seinem freien Ende 17 aus dem Aufnahmerohr 20 nach links heraus, bis er vollständig frei ist.

Nachdem man die Mittelkopfstütze 8 wieder um ihre erste Stange 23 in die in den Figuren 1 und 2 dargestellte weggeschwenkte, herausgezogene Position gebracht hat, wird die in Figur 7 dargestellte Stauposition der Mittelkopfstütze 8 durch einfaches Herunterdrücken erreicht.

Beim Herunterdrücken der ersten Stange 23 bewegt das Ende 25 den Hebel 11 nicht, da dieser in einen Längsschlitz 30 eintaucht, dessen Ebene so verläuft, dass der Hebel 11 darin liegt. Der Längsschlitz 30 weist dabei eine Breite auf, die geringfügig größer ist als die Dicke des Hebels 11. Damit wird gewährleistet, dass selbst bei einer nicht ganz exakten Ausrichtung zueinander der Hebel 11 gut in den Längsschlitz 30 eintauchen kann. Da der Hebel 11 nicht aus seiner Position bewegt wird-anders als beim Einschieben der Mittelkopfstütze 8 in ihre Gebrauchsstellung (Figuren 4 bis 6 sowie die gestrichelte Darstellung in Figur 7)-, findet auch keine Verriegelung durch den Verriegelungsmechanismus 5 statt. Somit sind in der Staustellung der Mittelkopfstütze 8 die beiden Teile 2, 3 der Rückenlehne 1 getrennt voneinander um die Achse 29 schwenkbar. Da der Winkel, den die Mittelkopfstütze 8 zwischen ihrer Stauposition und der Gebrauchsstellung überstreicht, deutlich von 180° verschieden ist, ist die Ebene des Längsschlitzes 30 in der Gebrauchsstellung nicht so ausgerichtet, dass der Hebel 11 in dieser zum Liegen käme, sondern es besteht ein Winkel zwischen der Ebene des Längsschlitzes 30 und dem Hebel 11 der der Differenz zwischen 180° und dem Winkel zwischen der Gebrauchsstellung und der Stauposition entspricht.

Der Effekt, dass in der eingeschobenen Stauposition keine Verriegelung der Rückenlehne 1 durch den Verriegelungsmechanismus zwischen den beiden Teilen 2, 3 erfolgt, jedoch bei dem eingeschobenen Zustand der Gebrauchsstellung der Mittelkopfstütze 8 sehr wohl eine solche Verriegelung stattfindet, kann neben der in Figur 7 dargestellten Möglichkeit eines Längsschlitzes 30 auch durch andere Maßnahmen erreicht werden. Beispielsweise kann die erste Stange 23 gebogen bzw. geknickt ausgeführt sein, so dass sie beim Einschieben in die Gebrauchsstellung den Hebel 11 betätigt (wie dies in den Figuren 4 bis 6 dargestellt ist) dagegen beim Einschieben in die Stauposition (vergleichbar mit Figur 7) weder das Ende 25 noch die Außenwand der ersten Stange 23 den Hebel 11 aus seiner diagonalen Position in seine vertikale Position bewegt.

Es versteht sich von selbst, dass neben dem dargestellten einarmigen Hebel 11 auch anders geformte einarmige Hebel und zweiarmige Hebel für den Verriegelungsmechanismus 5 verwendet werden können. Ebenso sind andere Verriegelungsmechanismen 5 einsetzbar. Es ist lediglich notwendig, dass der Verriegelungsmechanismus 5 im eingefahrenen Zustand der Mittelkopfstütze 8 eine Verriegelungsposition einnimmt, in der eine mechanische Kopplung zwischen den beiden Teilen 2, 3 erfolgt, so dass sich diese nicht in ihrer relativen Lage zueinander ändern können. Wenn dies nicht rein durch mechanische Mittel-wie im Ausführungsbeispiel dargestellt-realisiert wird sondern durch eine Kombination mit elektrischen oder pneumatischen Mitteln, fällt dies ebenso unter den erfindungsgemäßen Gedanken. Es ist demnach auch denkbar, Stellmotoren zu verwenden. Anstatt der Feder 22 sind auch andere Rückstellmechanismen möglich.

### Bezugszeichenliste

- 1: Rückenlehne
- 2: erster Teil
- 3: zweiter Teil
- 4: Fuge
- 5: Verriegelungsmechanismus
- 6: erste Kopfstütze
- 7: zweite Kopfstütze
- 8: Mittelkopfstütze
- 9: erste Hülse
- 10: zweite Hülse
- 11: Hebel
- 12: ortsfester Drehpunkt
- 13: Nase
- 14: Kulisse
- 15: Bolzen
- 16: Stift
- 17: freies Ende
- 18: Führungsrohr
- 19: Langloch
- 20: Aufnahmerohr
- 21: Trichter
- 22: Feder
- 23: erste Stange
- 24: zweite Stange
- 25: Ende
- 26: umlaufende Nut
- 27: Arretierungsnut
- 28: Sicherungskerbe
- 29: Achse
- 30: Längsschlitz

## Patentansprüche

1. Geteilte Rückenlehne (1) für einen Kraftfahrzeugsitz mit einem ersten Teil (2) und einem zweiten Teil (3), die entlang einer im Wesentlichen senkrecht verlaufenden Fuge (4) aneinander stoßen, wobei jeder Teil (2; 3) für sich um eine im Wesentlichen horizontale Achse (29) umklappbar ist, und in mindestens dem ersten Teil (2) in der Nähe der Fuge (4) eine erste Aufnahmevorrichtung für eine erste Stange (23) einer Mittelkopfstütze (8) ausgebildet ist, **dadurch gekennzeichnet, dass** die erste Aufnahmevorrichtung mit einem Verriegelungsmechanismus (5) verbunden ist, der eine Entriegelungsposition aufweist, in der die beiden Teile (2; 3) der Rückenlehne (1) ihre Position zueinander ändern können, und der eine Verriegelungsposition aufweist, in der die beiden Teile (2; 3) der Rückenlehne (1) in ihrer Position zueinander fixiert sind.

2. Geteilte Rückenlehne (1) nach Anspruch 1, **dadurch gekennzeichnet, dass** der Verriegelungsmechanismus (5) einen Hebel (11) und einen damit verbundenen Bolzen (15), der in der Horizontalen bewegbar ist, aufweist, die sich im ersten Teil (2) der Rückenlehne (1) befinden, sowie ein Aufnahmerohr (20) zur formschlüssigen Aufnahme des Bolzens (15), das sich im zweiten Teil (3) der Rückenlehne (1) befindet.

3. Geteilte Rückenlehne (1) nach Anspruch 2, **dadurch gekennzeichnet, dass** das Aufnahmerohr (20) zum ersten Teil (2) hin die Form eines sich öffnenden Trichters (21) aufweist.

4. Geteilte Rückenlehne (1) nach Anspruch 2 oder 3, **dadurch gekennzeichnet, dass** der Hebel (11) eine Nase (13) aufweist, die mit der ersten Stange (23) der Mittelkopfstütze (8) zusammenwirkt.

5. Geteilte Rückenlehne (1) nach einem der Ansprüche 1 bis 4, **dadurch gekennzeichnet, dass** der Verriegelungsmechanismus (5) eine Feder (22) aufweist, die ihn versucht, in seine Entriegelungsposition zu bewegen.

6. Geteilte Rückenlehne (1) nach einem der Ansprüche 1 bis 5, **dadurch gekennzeichnet, dass** im zweiten Teil (3) in der Nähe der Fuge (4) eine zweite Aufnahmevorrichtung für eine zweite Stange (24) der Mittelkopfstütze (8) ausgebildet ist.

7. Geteilte Rückenlehne (1) nach einem der Ansprüche 1 bis 6, **dadurch gekennzeichnet, dass** die erste Aufnahmevorrichtung eine erste Hülse (9) und/oder die zweite Aufnahmevorrichtung eine zweite Hülse (10) aufweisen.

8. Geteilte Rückenlehne (1) nach einem der Ansprüche 1 bis 7, **dadurch gekennzeichnet, dass** in sie eine Mittelkopfstütze (8) eingesetzt ist, deren erste Stange (23) in der ersten Aufnahmevorrichtung angeordnet ist und die mit dem Verriegelungsmechanismus (5) zusammenwirkt.

9. Geteilte Rückenlehne (1) nach einem der Ansprüche 6 bis 8, **dadurch gekennzeichnet, dass** die zweite Stange (24) kürzer ist als die erste Stange (23) der Mittelkopfstütze.

10. Geteilte Rückenlehne (1) nach einem der Ansprüche 8 bis 10, **dadurch gekennzeichnet, dass** die Mittelkopfstütze (8) in ihrer Breite verstellbar ist, insbesondere über einen Federmechanismus.

11. Geteilte Rückenlehne (1) nach einem der Ansprüche 1 bis 9, **dadurch gekennzeichnet, dass** im ersten Teil (2) eine dritte Aufnahmevorrichtung für die zweite Stange (24) ausgebildet ist.

12. Geteilte Rückenlehne (1) nach einem der Ansprüche 8 bis 11, **dadurch gekennzeichnet, dass** die erste Stange (23) der Mittelkopfstütze (8) gebogen ist.

13. Geteilte Rückenlehne (1) nach einem der Ansprüche 8 bis 11, **dadurch gekennzeichnet, dass** die erste Stange (23) der Mittelkopfstütze (8) einen durchgängigen Längsschlitz (30) aufweist, der sich vom unteren Ende (25) her nach oben erstreckt.

14. Geteilte Rückenlehne (1) nach Anspruch 13, **dadurch gekennzeichnet, dass** die Breite des Längsschlitzes (30) geringfügig größer ist als die Dicke des Hebels (11).

15. Geteilte Rückenlehne (1) nach einem der Ansprüche 13 oder 14, **dadurch gekennzeichnet, dass** die Ebene des Längsschlitzes (30) so angeordnet ist, dass der Hebel (11) in ihr liegt, wenn sich die Mittelkopfstütze (8) in einer weggeschwenkten Position befindet.

16. Verfahren zur Unterbindung der Relativbewegung der beiden Teile (2; 3) der geteilten Rückenlehne (1) gemäß einem der vorstehenden Ansprüche **dadurch gekennzeichnet, dass** die erste Stange (23) der Mittelkopfstütze (8) in die erste Aufnahmevorrichtung eingeführt wird und beim Herunterdrücken den Verriegelungsmechanismus (5) betätigt, so dass eine Verbindung zwischen dem ersten Teil (2) und dem zweiten Teil (3) der Rückenlehne (1) hergestellt wird, die diese beiden Teile (2; 3) in ihrer Lage zueinander fixiert.

## Claims

1. A divided back rest (1) for a seat in a motor vehicle, comprising a first part (2) and a second part (3) which abut one another along a substantially vertical joint (4), wherein each part (2; 3) can be independently folded round a substantially horizontal axis (29), and a first device for receiving a first rod (23) of a central head rest (8) is formed in at least the first part (2) near the joint (4), **characterised in that** the first receiving device is connected to a locking mechanism (5) which has an unlocking position in which the two parts (2; 3) of the back rest (1) can alter position relative to one another, and a locking position in which the two parts (2; 3) of the back rest (1) are fixed in position relative to one another.

2. A divided back rest (1) according to claim 1, **characterised in that** the locking mechanism (5) comprises a lever (11) connected to a horizontally movable bolt (15), both situated in the first part (2) of the back rest (1), and a tube (20) for positively receiving the bolt (15) and in the second part (3) of the back rest (1).

3. A divided back rest (1) according to claim 2, **characterised in that** the receiving tube (20) is in the form of a funnel (21) which opens towards the first part (2).

4. A divided back rest (1) according to claim 2 or claim 3, **characterised in that** the lever (11) has a lug (13) which co-operates with the first rod (23) of the central head rest (8).

5. A divided back rest (1) according to any of claims 1 to 4, **characterised in that** the locking mechanism (5) comprises a spring (22) which tries to move it into the unlocking position.

6. A divided back rest (1) according to any of claims 1 to 5, **characterised in that** a second device for receiving a second rod (24) of the central head rest (8) is formed in the second part (3) near the joint (4).

7. A divided back rest (1) according to any of claims 1 to 6, **characterised in that** the first receiving device comprises a first sleeve (9) and/or the second receiving device comprises a second sleeve (10).

8. A divided back rest (1) according to any of claims 1 to 7, **characterised in that** a central head rest (8) inserted therein has a first rod (23) disposed in the first receiving device and co-operating with the locking mechanism 15).

9. A divided back rest (1) according to any of claims 6 to 8, **characterised in that** the second rod (24) is shorter than the first rod (23) of the central head rest.

10. A divided back rest (1) according to any of claims 8 to 9, **characterised in that** the central head rest (8) is adjustable in width, especially via a spring mechanism.

11. A divided back rest (1) according to any of claims 1 to 9, **characterised in that** a third receiving device is formed for the second rod (24) in the first part (2).

12. A divided back rest (1) according to any of claims 8 to 11, **characterised in that** the first rod (23) of the central head rest (8) is bent.

13. A divided back rest (1) according to any of claims 8 to 11, **characterised in that** the first rod (23) of the central head rest (8) has a continuous elongated slot (30) which extends from the bottom end (25) upwards.

14. A divided back rest (1) according to claim 13, **characterised in that** the width of the slot (30) is slightly greater than the thickness of the lever (11).

15. A divided back rest (1) according to claim 13 or claim 14, **characterised in that** the plane of the slot (30) is such that the lever (11) lies in it when the central head rest (8) is in a swung-out position.

16. A method of preventing relative movement between the two parts (2; 3) of the divided back rest (1) according to any of the preceding claims, **characterised in that** the first rod (23) of the central head rest (8) is inserted into the first receiving device and, when pressed down, actuates the locking mechanism (5) so that a connection is made between the first part (2) and the second part (3) of the back rest (1) so as to fix these two parts (2; 3) in position relative to one another.

## Revendications

1. Dossier divisé (1) pour un siège de véhicule comprenant un premier segment (2) et un deuxième segment (3) qui se rencontrent le long d'un joint (4) courant sensiblement verticalement, chaque segment (2 ; 3) étant rabattable individuellement autour d'un axe sensiblement horizontal (29), et avec un premier dispositif de réception formé au moins dans le premier segment (2) à proximité du joint (4) pour une première tige (23) d'un appuie-tête central (8),
**caractérisé en ce que**
le premier dispositif de réception est relié à un mécanisme de verrouillage (5) qui présente une position de déverrouillage dans laquelle les deux segments (2 ; 3) du dossier (1) peuvent changer de position l'un par rapport à l'autre, et une position de verrouillage dans laquelle les deux segments (2 ; 3) du dossier (1) sont fixés en position l'un par rapport à l'autre.

2. Dossier divisé (1) selon la revendication 1,
**caractérisé en ce que**
le mécanisme de verrouillage (5) présente un levier (11) et un boulon (5) relié à celui-ci et mobile horizontalement, qui se trouvent dans le premier segment (2) du dossier (1), ainsi qu'un tube de réception (20) qui pour recevoir mécaniquement le boulon (15) se trouve dans le deuxième segment (3) du dossier (1).

3. Dossier divisé (1) selon la revendication 2,
**caractérisé en ce que**
le tube de réception (20) se présente sous la forme d'un entonnoir (21) ouvert vers le premier segment (2).

4. Dossier divisé (1) selon la revendication 2 ou 3,
**caractérisé en ce que**
le levier (11) présente un bec (13) qui interagit avec la première tige (23) de l'appuie-tête central (8).

5. Dossier divisé (1) selon l'une des revendications 1 à 4,
**caractérisé en ce que**
le mécanisme de verrouillage (5) présente un ressort (22) qui tend à le déplacer vers sa position de déverrouillage.

6. Dossier divisé (1) selon l'une des revendications 1 à 5,
**caractérisé en ce que**
dans le deuxième segment (3) est formé à proximité du joint (4) un deuxième dispositif de réception pour une deuxième tige (24) de l'appuie-tête central (8).

7. Dossier divisé (1) selon l'une des revendications 1 à 6,
**caractérisé en ce que**
le premier de réception comprend un premier manchon (9) et/ou le deuxième dispositif de réception un deuxième manchon (10).

8. Dossier divisé (1) selon l'une des revendications 1 à 7,
**caractérisé en ce qu'**
à l'intérieur est monté un appuie-tête central (8) dont la première tige (23) est disposée dans le premier dispositif de réception et qui interagit avec le mécanisme de verrouillage (5).

9. Dossier divisé (1) selon l'une des revendications 6 à 8,
**caractérisé en ce que**
la deuxième tige (24) est plus courte que la première tige (23) de l'appuie-tête central.

10. Dossier divisé (1) selon l'une des revendications 8 et 9,
**caractérisé en ce que**
l'appuie-tête central (8) est réglable en largeur, en particulier par un mécanisme à ressort.

11. Dossier divisé (1) selon l'une des revendications 1 à 9,
**caractérisé en ce que**
dans le premier segment est formé un troisième dispositif de réception pour la deuxième tige (24).

12. Dossier divisé (1) selon l'une des revendications 8 à 11,
**caractérisé en ce que**
la première tige (23) de l'appuie-tête central (8) est coudée.

13. Dossier divisé (1) selon l'une des revendications 8 à 11,
**caractérisé en ce que**
la première tige (23) de l'appuie-tête central (8) présente une fente longitudinale (30) qui s'étend vers le haut à partir de l'extrémité inférieure (25).

14. Dossier divisé (1) selon la revendication 13,
**caractérisé en ce que**
la largeur de la fente longitudinale (30) est légèrement supérieure à l'épaisseur du levier (11).

15. Dossier divisé (1) selon l'une des revendications 13 ou 14,
**caractérisé en ce que**
le plan de la fente longitudinale (30) est disposé de telle sorte que le levier est à l'intérieur lorsque l'appuie-tête central (8) se trouve dans un position tournée.

16. Procédé pour empêcher le déplacement entre eux des deux segments (2 ; 3) du dossier divisé (1) selon l'une des revendications précédentes,
**caractérisé en ce que**
la première tige (23) de l'appuie-tête central (8) s'insère dans le premier dispositif de réception et, lorsqu'elle est enfoncée, actionne le mécanisme de verrouillage (5) pour établir entre le premier segment (2) et le deuxième segment (3) du dossier (1), une liaison qui solidarise les deux segments (2 ; 3) en position.
